# EUROPEAN PATENT SPECIFICATION

(11) **EP 1 026 031 B1**
(45) Date of publication and mention of the grant of the patent: **02.01.2004**
(21) Application number: 00830062.6
(22) Date of filing: 28.01.2000
(51) Int. Cl.: B60Q 1/20, B62D 15/02, B60Q 1/00

(54) **Dual-band infra-red vision system for motor-vehicles**
Infrarotes Zweiband-Sichtsystem für Kraftfahrzeuge
Système de vision infrarouge à double bande pour véhicules automobiles

(30) Priority: 02.02.1999 IT TO990073
(43) Date of publication of application: 09.08.2000
(73) Proprietor: C.R.F. Società Consortile per Azioni, 10043 Orbassano (Torino) (IT)
(72) Inventor: Perlo, Piero, 12048 Sommariva Bosco (Cuneo) (IT); Repetto, Piermario, 10145 Torino (IT); Bigliati, Claudia, 13039 Trino (Vercelli) (IT); Lambertini, Vito, 10049 Giaveno (Torino) (IT); Sinesi, Sabino, 10045 Piossasco (IT)
(74) Representative: Notaro, Giancarlo

(56) References cited:
- DE-A- 4 032 927
- FR-A- 2 730 035
- US-A- 5 796 514

## Description

The present invention relates to infrared vision systems for motor vehicles, of the type comprising an infrared-radiation detecting device designed to be mounted on the front of a motor vehicle, the device including infrared sensor means designed to emit electrical signals according to the infrared radiation detected, optical imaging means for focusing the infrared image of the scene in front of the vehicle on said sensor means, electronic means for processing the signals issued by the sensor means, and image-displaying means controlled by said electronic means.

The known infrared vision systems that have so far been produced exploit infrared radiation in a wave band ranging from 8 to 14 micron (longwave window - LW), which is emitted spontaneously to a variable extent by all the objects of the scene in front of the motor vehicle. These systems do not enable optimal results to be achieved, especially in particular conditions, such as in the presence of fog.

An infrared vision system according to the preamble of claim 1 is known from FR-A-2 730 035.

The purpose of the present invention is to propose a new infrared vision system for motor vehicles that enables improvement of night vision in all conditions, and in particular in the presence of thick fog.

In order to achieve the above purpose, the subject of the invention is a vision system of the type specified above, characterized in that the aforesaid optical imaging means are designed to focus both infrared radiation in a first wave band, corresponding to the radiation spontaneously emitted by the objects of the scene in front of the motor vehicle, and infrared radiation in a second wave band, which is in part emitted spontaneously by the objects of the scene, and in part is emitted by a source of infrared radiation which forms part of the vision system and is reflected by the objects in front of the vehicle towards said detecting device.

As has already been mentioned, the radiation emitted spontaneously by the scene falls within a wavelength range of between 8 and 14 micron (longwave window - LW). In a preferred embodiment of the invention, the above-mentioned infrared-radiation source forming part of the system is designed to emit radiation in a wave band of between 3 and 5 micron (midwave window - MW). This radiation is reflected by the objects of the scene, and is then detected by the sensor means forming part of the system according to the invention. Again according to the invention, the aforesaid optical imaging means comprise two optical imaging devices, which are combined in such a way as to minimize dispersion between the two aforesaid wave bands, and a discriminator designed to send to the sensor means alternately the radiation in the first band and the radiation in the second band (for example, a discriminator of a rotary type).

In a preferred embodiment, the above-mentioned sensor means consist of a matrix of non-cooled thermal sensors, of a type chosen from among pyro-electric sensors, resistive bolometers, ferro-electric bolometers, and thermo-electric sensors of a conventional type.

Again in the case of the preferred embodiment, the said infrared-radiation source consists of a headlight of the motor vehicle which has a front element that is at least in part transparent to infrared radiation. In this case, the detecting device of the vision system according to the invention is built into the said headlight of the motor vehicle.

The control electronics forming part of the system according to the invention makes it possible to read, interpret and superimpose the infrared images in the two bands acquired by the sensors, so presenting a single infrared image of the scene on the display means at output. The main advantage of the system according to the invention is that it enables simultaneous exploitation of the greater intensity of the IR image in the 8-14 micron LW window and the greater contrast of the IR image in the 3-4 micron MW window in the temperature range of interest.

Further characteristics and advantages of the invention will emerge from the ensuing description with reference to the attached drawings, which are provided purely as a non-limiting example and in which:
Figure 1 is a cross-sectional schematic view of a vision system according to the invention;
Figure 2 is a front view of a rotary discriminator forming part of the system of Figure 1; and
Figure 3 illustrates a variant of Figure 2.

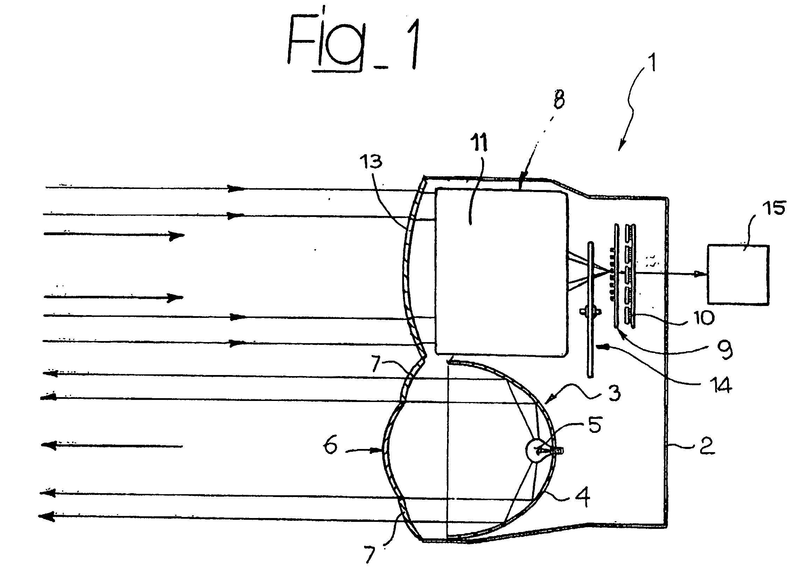

In Figure 1, the reference number 1 designates, as a whole, a motor-vehicle headlight comprising a rigid casing 2 inside which is set a headlight 3 including a parabolic dish 4 associated to a lamp 5. The reference number 6 designates the transparent front element of the headlight 3, which presents, in the case of the example illustrated, peripheral windows 7 that are transparent to infrared radiation. The lamp 5 is chosen so as to emit infrared radiation in a wave band of between 3 and 5 micron.

The body 2 of the headlight 1 also includes an infrared-radiation detecting device 8 comprising infrared sensor means 9 consisting of a matrix of non-cooled thermal sensors, for example pyro-electric sensors or resistive bolometers, or ferro-electric bolometers, or thermoelectric sensors of a conventional type, which are designed to send electrical signals according to the infrared image detected to a processing electronic control unit 10. The detecting device 8 comprises an optical imaging system 11 which is designed to focus on the sensors 9 both the infrared image in the 3-5 micron wave band, which is reflected by the objects of the scene in front of the vehicle, and the infrared radiation in the 8-14 micron wave band, which is emitted spontaneously by the objects of the scene. The detecting device 8 has, at the front, a window 13 which is transparent to infrared radiation.

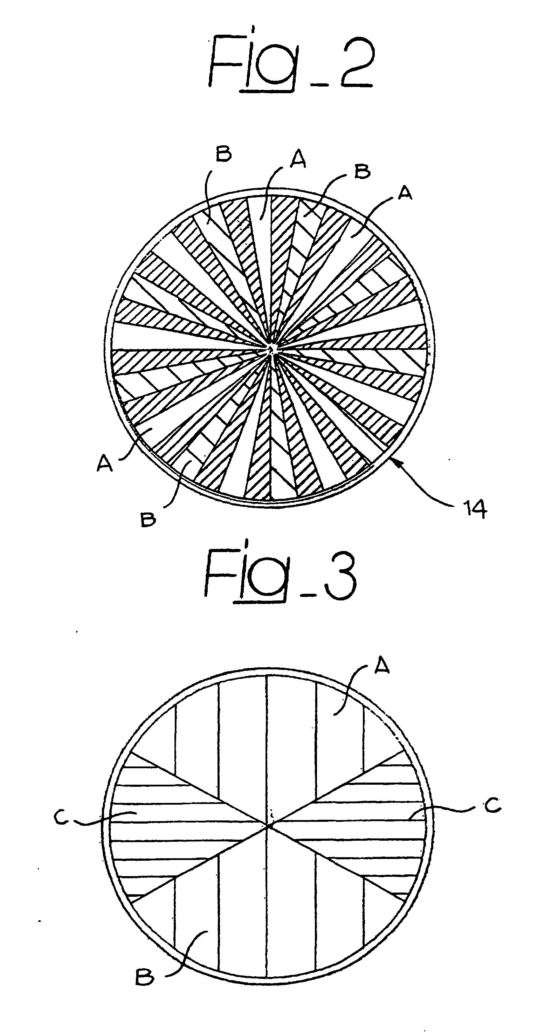

Between the optical imaging system 11 and the matrix of sensors 9 is set a rotary optical discriminator 14, of which Figure 2 and 3 illustrate two possible embodiments. In both cases, the said optical discriminator 14 consists of a disc having sectors A that are transparent to infrared radiation of between 8 and 14 micron, sectors B that are transparent to infrared radiation of between 3 and 5 micron, and opaque sectors C that clearly divide the sectors A from the sectors B. The rotary discriminator 14 is used to send alternately the 8-14 micron infrared radiation and the 3-5 micron infrared radiation to the sensor means 9. The electronic control unit 10 is designed to read, interpret and superimpose the infrared images in the two bands acquired by the sensors, presenting at output, on a display 15 provided on the motor vehicle dashboard or on the windscreen itself, according to a HEAD-UP type technology, a single infrared image of the scene. As has already been mentioned, the main advantage of the device lies in the fact that it enables simultaneous exploitation of the greater intensity of the IR image in the 8-14 micron band and the greater contrast of the IR image in the 3-5 micron band.

The source of 3-5 micron IR radiation could also be a dedicated source, distinct from the vehicle headlight.

Of course, without prejudice to the principle of the invention, the details of construction and the embodiments may vary widely with respect to what is herein described and illustrated purely for the purpose of providing an example, without thereby departing from the scope of the present invention as defined by the appended claims.

## Claims

1. An infrared vision system for motor vehicles, comprising a source (5) of infrared radiation and an infrared-radiation detecting device (8) designed to be mounted on the front of a motor vehicle, the device including infrared sensor means (9) designed to emit electrical signals according to the infrared radiation detected, optical imaging means (11) for focusing the infrared image of the scene in front of the vehicle on said sensor means (9), electronic means (10) for processing the signals issued by the sensor means (9), and image-displaying means (15) controlled by said electronic means (10),
**characterized in that** said optical imaging means (11) are designed to focus both infrared radiation in a first wave band, corresponding to the radiation spontaneously emitted by the objects of the scene in front of the motor vehicle, and infrared radiation in a second wave band, which is in part emitted spontaneously by the objects of the scene, and in part is emitted by the source (5) of infrared radiation which forms part of said vision system (1) and is reflected by the objects in front of the vehicle towards said detecting device (8).

2. A vision system according to Claim 1, **characterized in that** the optical imaging means (11) comprise two optical imaging devices, which are combined in such a way as to minimize dispersion between the two aforesaid wave bands, and a rotary discriminator (14) designed to send to the sensor means (9) alternately the radiation in the first band and the radiation in the second band.

3. A vision system according to Claim 2, **characterized in that** the sensor means (9) consist of a matrix of non-cooled thermal sensors, of a type chosen from among pyro-electric sensors, resistive bolometers, ferro-electric bolometers, and thermo-electric sensors of a conventional type.

4. A vision system according to Claim 1, **characterized in that** said first band includes wavelengths ranging from 8 to 14 micron.

5. A vision system according to Claim 1, **characterized in that** said second band includes wavelengths ranging from 3 to 5 micron.

6. A vision system according to Claim 1, **characterized in that** said infrared-radiation source (5) consists of a headlight (3) of the motor vehicle, which has a front element (6), at least part (7) of which is transparent to said infrared radiation.

7. A vision system according to Claim 1, **characterized in that** the control electronics forming part of the system according to the invention makes it possible to read, interpret and superimpose the infrared images in the two bands acquired by the sensors, so presenting a single infrared image of the scene on the display means at output.

## Patentansprüche

1. Infrarotsichtsystem für Kraftfahrzeuge, aufweisend eine Quelle (5) für Infrarotstrahlung und eine Infrarotstrahlungsdetektionsvorrichtung (8), gestaltet, um an der Front eines Kraftfahrzeugs angebracht zu sein, wobei die Vorrichtung Infrarotsensormittel (9) einschließt, die gestaltet sind, um elektrische Signale entsprechend der detektierten Infrarotstrahlung auszusenden, optische Bildmittel (11), zum Fokussieren des Infrarotbildes der Szene vor dem Fahrzeug auf die Sensormittel (9), elektronische Mittel (10), zum Verarbeiten der Signale, welche von den Sensormitteln (9) ausgegeben sind, und Bildanzeigemittel (15), gesteuert durch die elektronischen Mittel (10),
**dadurch gekennzeichnet, dass** die optischen Bildmittel (11) gestaltet sind, um sowohl Infrarotstrahlung in einem ersten Wellenband, entsprechend der spontan emittierten Strahlung durch die Objekte der Szene vor dem Kraftfahrzeug, und Infrarotstrahlung in einem zweiten Wellenband zu fokussieren, welches teilweise spontan durch die Objekte der Szene emittiert ist und teilweise durch die Quelle (5) für Infrarotstrahlung emittiert ist, welche einen Teil des Sichtsystems (1) bildet, und durch die Objekte vor dem Fahrzeug zu der Detektionsvorrichtung (8) reflektiert ist.

2. Sichtsystem gemäß Anspruch 1, **dadurch gekennzeichnet, dass** die optischen Bildmittel (11) zwei optische Bildvorrichtungen umfassen, welche in einer solchen Art und Weise kombiniert sind, um eine Dispersion zwischen den zwei vorgenannten Wellenbändern zu minimieren, und einen Drehdiskriminator (14), gestaltet, um wechselweise die Strahlung in dem ersten Band und die Strahlung in dem zweiten Band zu den Sensormitteln (9) zu senden.

3. Sichtsystem gemäß Anspruch 2, **dadurch gekennzeichnet, dass** die Sensormittel (9) aus einer Matrix aus nicht gekühlten thermischen Sensoren bestehen, von einem Typ ausgewählt aus pyro-elektrischen Sensoren, Widerstandsbolometern, ferror-elektrischen Bolometern und thermoelektrischen Sensoren eines herkömmlichen Typs.

4. Sichtsystem gemäß Anspruch 1, **dadurch gekennzeichnet, dass** das erste Band Wellenlängen einschließt, welche von 8 bis 14 µm reichen.

5. Sichtsystem gemäß Anspruch 1, **dadurch gekennzeichnet, dass** das zweite Band Wellenlängen einschließt, welche von 3 bis 5 µm reichen.

6. Sichtsystem gemäß Anspruch I, **dadurch gekennzeichnet, dass** die Infrarotstrahlungsquelle (5) aus einem Frontscheinwerfer (3) des Kraftfahrzeugs besteht, welches ein Frontelement (6) aufweist, zumindest dessen Teil (7) fiir die Infrarotstrahlung transparent ist.

7. Sichtsystem gemäß Anspruch 1, **dadurch gekennzeichnet, dass** die Steuerelektronik, welche einen Teil des Systems gemäß der Erfindung bildet, es möglich macht, die Infrarotbilder in den zwei Bändern, erhalten durch die Sensoren, zu lesen, zu interpretieren und zu überlagern, um so ein einzelnes Infrarotbild der Szene auf den Anzeigemitteln einer Ausgabe darzubieten.

## Revendications

1. Système de vision infrarouge pour véhicules automobiles, comportant une source (5) de rayonnement infrarouge et un dispositif (8) de détection de rayonnement infrarouge conçu pour être monté sur l'avant d'un véhicule automobile, le dispositif comprenant des moyens formant capteurs à infrarouge (9) conçus pour émettre des signaux électriques conformément au rayonnement infrarouge détecté, des moyens d'imagerie optique (11) pour focaliser l'image infrarouge de la scène en avant du véhicule sur lesdits moyens formant capteurs (9), des moyens électronique (10) pour traiter des signaux délivrés par les moyens formant capteurs (9), et des moyens d'affichage d'images (15) commandés par lesdits moyens électroniques (10),
**caractérisé en ce que** lesdits moyens d'imagerie optique (11) sont conçus de manière à focaliser à la fois le rayonnement infrarouge dans une première bande d'ondes correspondant au rayonnement émis spontanément par les objets de la scène en avant du véhicule automobile, et un rayonnement infrarouge dans une seconde bande d'ondes et qui en partie est émise spontanément par les images de la scène, et en partie est émise par la source (5) de rayonnement infrarouge, qui fait partie dudit système de vision (1) et est réfléchie par les objets en avant du véhicule en direction du dispositif de détection (8).

2. Système de vision selon la revendication 1, **caractérisé en ce que** les moyens d'imagerie optique (11) comprennent deux dispositifs d'imagerie optique, qui sont combinés de manière à minimiser la dispersion entre les deux bandes d'ondes mentionnées précédemment, et un discriminateur rotatif (14) conçu de manière à envoyer aux moyens formant capteurs (9) alternativement le rayonnement dans la première bande et le rayonnement dans la seconde bande.

3. Système de vision selon la revendication 2, **caractérisé en ce que** les moyens formant capteurs (9) sont constitués par une matrice de capteurs thermiques non refroidis, d'un type choisi parmi des capteurs pyroélectriques, des bolomètres résistifs, des bolomètres ferroélectriques et des capteurs thermoélectriques d'un type classique.

4. Système de vision selon la revendication 1, **caractérisé en ce que** ladite première bande inclut des longueurs d'onde s'étageant entre 8 et 14 micromètres.

5. Système de vision selon la revendication 1, **caractérisé en ce que** ladite seconde bande inclut des longueurs d'onde s'étageant entre 3 et 5 micromètres.

6. Système de vision selon la revendication 1, **caractérisé en ce que** ladite source de rayonnement infrarouge (5) est constituée par un phare (3) du véhicule automobile, qui possède un élément avant (6), dont au moins une partie (7) est transparente pour ledit rayonnement infrarouge.

7. Système de vision selon la revendication 1, **caractérisé en ce que** le système électronique de commande, qui fait partie du système selon l'invention, permet de lire, d'interpréter et de superposer les images infrarouges dans les deux bandes qui sont reçues par les capteurs, en présentant ainsi une seule image infrarouge de la scène sur les moyens d'affichage, en tant que signal de sortie.
